(19) **Europäisches Patentamt European Patent Office Office européen des brevets**

(11) **EP 4 471 464 A1**

(12) **EUROPEAN PATENT APPLICATION**

(43) Date of publication:
**04.12.2024 Bulletin 2024/49**

(21) Application number: **24179416.3**

(22) Date of filing: **31.05.2024**

(51) International Patent Classification (IPC):
**G01V 1/36** $^{(2006.01)}$

(52) Cooperative Patent Classification (CPC):
**G01V 1/364;** G01V 2210/3248

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **01.06.2023 IN 202311037870**

(71) Applicants:
• **Services Pétroliers Schlumberger**
  **75007 Paris (FR)**
  Designated Contracting States:
  **FR**
• **GeoQuest Systems B.V.**
  **2514 JG The Hague (NL)**
  Designated Contracting States:
  **AL AT BE BG CH CY CZ DE DK EE ES FI GB GR HR HU IE IS IT LI LT LU LV MC ME MK MT NL NO PL PT RO RS SE SI SK SM TR**

(72) Inventors:
• **KAMIL AMIN, Yousif Izzeldin**
  **31952 Dhahran (SA)**
• **KUMAR, Rajiv**
  **West Sussex, RH6 0NZ (GB)**
• **VASSALLO, Massimiliano**
  **West Sussex, RH6 0NZ (GB)**
• **MANIKANI, Sunil**
  **411006 Maharashtra (IN)**
• **BILSBY, Phillip James**
  **Crawley, RH10 9BU (GB)**
• **ZHAO, Tao**
  **Houston, TX 77077 (US)**
• **PHAM, Nam**
  **Houston, TX 77077 (US)**
• **GIRO, Riccardo Angelo**
  **20015 Parabiago (IT)**

(74) Representative: **Schlumberger Intellectual Property Department**
**Parkstraat 83**
**2514 JG Den Haag (NL)**

(54) **AUTOMATING THE PARAMETRIZATION OF MULTI-STAGE ITERATIVE SOURCE SEPARATION WITH PRIORS USING MACHINE-LEARNING**

(57) Systems and methods may use machine learning to automate the parameterization process for multi-stage iterative source separation. Seismic signals that are generated by a plurality of sources are received by a plurality of sensors within a field as a blended signal. An automated machine learning model that has been trained on blended and unblended signals determines if the incoming blended signal has a relatively high or low signal to noise ratio and then selects a threshold value based on the detected signal to noise ratio. The blended signal is then separated according to the source of the seismic data. A seismic image based on the separated seismic data is then generated which can then be used to adjust one or more control parameters in a machine or tool within the field.

**EP 4 471 464 A1**

**Description**

**Related Application**

This application claims the benefit of India Provisional Patent Application No. 202311037870, filed June 1, 2023, and entitled, "AUTOMATING THE PARAMETRIZATION OF MULTI-STAGE ITERATIVE SOURCE SEPARATION WITH PRIORS USING MACHINE-LEARNING," which is hereby incorporated by reference herein in its entirety.

**Background**

Acquiring seismic data using simultaneous sources is a standard practice to improve the acquisition efficiency. Thus, source separation technology may be used at the first stage of a seismic pre-processing workflow. The underlying principle of source separation relies on the fact that in multisource domain such as common receiver gather (CRG), the seismic signal of interest exhibits higher coherency and is sparse in the transform domain, whereas the interference noise appears randomly and uniformly distributed in a transform domain.

**Summary**

According to certain embodiments, the current invention provides a method for processing seismic data. The method includes receiving blended seismic data from at least one seismic source. The method also includes applying a sparsity promoting transform domain to the received blended seismic data to differentiate a primary signal from interference and background noise. Next, according to certain embodiments, the method includes isolating the primary signal from the interference and background noise by selecting a threshold value in the sparsity promoting transform domain using a machine learning model. According to certain embodiments, the primary signal represents unblended seismic data. The method includes removing the interference and background noise from the unblended seismic data to produce modified seismic data.
According to certain embodiments, the current invention provides a computing system. The computing system includes one or more processors, at least one seismic source communicated to the one or more processors, and a memory system including one or more non-transitory computer-readable media storing instructions that, when executed by at least one of the one or more processors, cause the computing system to perform operations. According to certain embodiments, the operations performed by the computing system include performing a method for processing seismic data. The method includes receiving blended seismic data from the at least one seismic source. The method also includes applying a sparsity promoting transform domain to the received blended seismic data to differentiate a primary signal from interference and background noise. The method further includes enhancing a sparsity of the blended seismic data in the transform domain by using wavefield propagation information. According to certain embodiments, the method also includes isolating the primary signal from the interference and background noise by selecting a threshold value in the sparsity promoting transform domain using a machine learning model. Here, the primary signal represents unblended seismic data. According to certain embodiments, the machine learning model is trained to determine if a subset of the seismic data represents a high or a low signal to noise ratio relative to a predetermined value. The method also includes removing the interference and background noise from the unblended seismic data to produce modified seismic data. The method further includes generating an image of the subsurface based on the modified seismic data.
According to certain embodiments, the current invention provides a non-transitory computer-readable medium storing instructions that, when executed by at least one processor of a computing system, cause the computing system to perform operations. According to certain embodiments, the operations performed by the computing system include performing a method for processing seismic data. According to certain embodiments, the method includes receiving blended seismic data from at least one seismic source. The method also includes applying a sparsity promoting transform domain to the received blended seismic data to differentiate a primary signal from interference and background noise. The method further includes enhancing a sparsity of the blended seismic data in the transform domain by using wavefield propagation information. The method also includes isolating the primary signal from the interference and background noise by selecting a threshold value in the sparsity promoting transform domain using a machine learning model. According to certain embodiments, the primary signal represents unblended seismic data. According to certain embodiments, the machine learning model is trained to determine if a subset of the seismic data represents a high or a low signal to noise ratio relative to a predetermined value. In a further embodiment, the threshold value is based at least partially upon multiple independent applications of the sparsity promoting transform domain to the received blended seismic data. According to certain embodiments, the machine learning model includes a convolutional neural network (CNN) in which a classification head and a regression head share weights in initial layers of the CNN. According to certain embodiments, selecting the threshold value includes determining whether to pass a section of the seismic data to a thresholding routine based on binary cross entropy loss using the classification head of the machine learning model,

determining the threshold value based on mean square error (MSE) loss using the regression head of the learning model in response to determining to pass the section to the thresholding routine, and conducing pixelwise noise and signal thresholding estimations based on MSE loss using a segmentation head of the machine learning model, wherein the segmentation head shares weights in initial layers of the CNN. According to certain embodiments, the method also includes removing the interference and background noise from the unblended seismic data based on the selected threshold value and the application of the sparsity promoting transform domain to the received blended seismic data to produce modified seismic data. The method also includes generating an image of the subsurface based on the modified seismic data. The method further includes displaying the image on a display. According to certain embodiments, the method also includes performing a wellsite action in response to the modified seismic data. In certain embodiments, performing the wellsite action includes generating or transmitting a signal that instructs or causes an action to occur, the action including a physical action. In certain embodiments, the physical action includes selecting where to drill a wellbore in the subsurface formation, drilling the wellbore, varying a trajectory of the wellbore, varying a weight or torque on a drill bit that is drilling the wellbore, varying a rate or concentration of a fluid being pumped into the wellbore, or a combination thereof.

Combinations, (including multiple dependent combinations) of the above-described elements and those within the specification have been contemplated by the inventors and may be made, except where otherwise indicated or where contradictory.

**Brief Description of the Drawings**

The accompanying drawings, which are incorporated in and constitute a part of this specification, illustrate embodiments of the present teachings and together with the description, serve to explain the principles of the present teachings. In the figures:

Figures 1A, 1B, 1C, 1D, 2, 3A, and 3B illustrate simplified, schematic views of an oilfield and its operation, according to an embodiment.
Figure 4 illustrates a schematic view of a workflow for source separation using a machine learning model, according to an embodiment.
Figure 5 illustrates a flowchart of a method for seismic processing, according to an embodiment.
Figure 6 illustrates a schematic view of a computing system for performing at least a portion of the method(s) described herein, according to an embodiment.

**Description of Embodiments**

Reference will now be made in detail to embodiments, examples of which are illustrated in the accompanying drawings and figures. In the following detailed description, numerous specific details are set forth in order to provide a thorough understanding of the invention. However, it will be apparent to one of ordinary skill in the art that the invention may be practiced without these specific details. In other instances, well-known methods, procedures, components, circuits and networks have not been described in detail so as not to unnecessarily obscure aspects of the embodiments.

It will also be understood that, although the terms first, second, etc. may be used herein to describe various elements, these elements should not be limited by these terms. These terms are only used to distinguish one element from another. For example, a first object could be termed a second object, and, similarly, a second object could be termed a first object, without departing from the scope of the invention. The first object and the second object are both objects, respectively, but they are not to be considered the same object.

The terminology used in the description of the invention herein is for the purpose of describing particular embodiments only and is not intended to be limiting of the invention. As used in the description of the invention and the appended claims, the singular forms "a," "an" and "the" are intended to include the plural forms as well, unless the context clearly indicates otherwise. It will also be understood that the term "and/or" as used herein refers to and encompasses any possible combinations of one or more of the associated listed items. It will be further understood that the terms "includes," "including," "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Further, as used herein, the term "if" may be construed to mean "when" or "upon" or "in response to determining" or "in response to detecting," depending on the context.

Attention is now directed to processing procedures, methods, techniques and workflows that are in accordance with some embodiments. Some operations in the processing procedures, methods, techniques and workflows disclosed herein may be combined and/or the order of some operations may be changed.

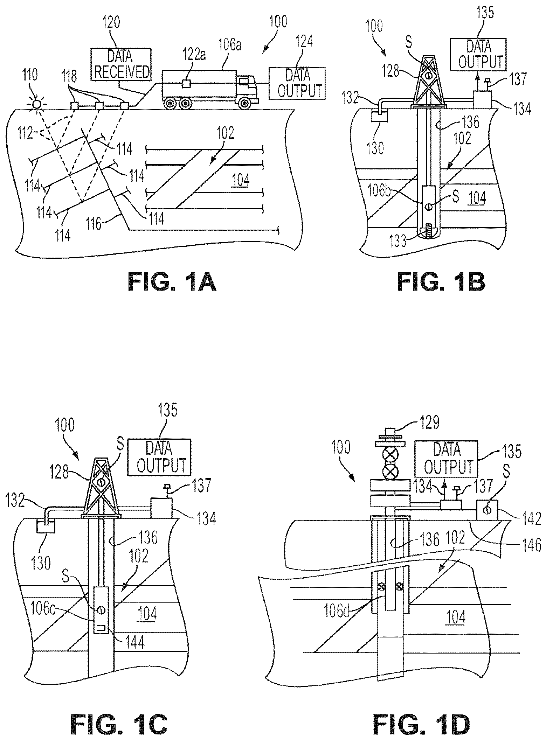

Figures 1A-1D illustrate simplified, schematic views of oilfield 100 having subterranean formation 102 containing reservoir 104 therein in accordance with implementations of various technologies and techniques described herein. Figure 1A illustrates a survey operation being performed by a survey tool, such as seismic truck 106a, to measure properties of the subterranean formation. The survey operation is a seismic survey operation for producing sound vibrations. In Figure 1A, one such sound vibration, e.g., sound vibration 112 generated by source 110, reflects off horizons 114 in earth formation 116. A set of sound vibrations is received by sensors, such as geophone-receivers 118, situated on the earth's surface. The data received 120 is provided as input data to a computer 122a of a seismic truck 106a, and responsive to the input data, computer 122a generates seismic data output 124. This seismic data output may be stored, transmitted or further processed as desired, for example, by data reduction.

Figure 1B illustrates a drilling operation being performed by drilling tools 106b suspended by rig 128 and advanced into subterranean formations 102 to form wellbore 136. Mud pit 130 is used to draw drilling mud into the drilling tools via flow line 132 for circulating drilling mud down through the drilling tools, then up wellbore 136 and back to the surface. The drilling mud is typically filtered and returned to the mud pit. A circulating system may be used for storing, controlling, or filtering the flowing drilling mud. The drilling tools are advanced into subterranean formations 102 to reach reservoir 104. Each well may target one or more reservoirs. The drilling tools are adapted for measuring downhole properties using logging while drilling tools. The logging while drilling tools may also be adapted for taking core sample 133 as shown.

Computer facilities may be positioned at various locations about the oilfield 100 (e.g., the surface unit 134) and/or at remote locations. Surface unit 134 may be used to communicate with the drilling tools and/or offsite operations, as well as with other surface or downhole sensors. Surface unit 134 is capable of communicating with the drilling tools to send commands to the drilling tools, and to receive data therefrom. Surface unit 134 may also collect data generated during the drilling operation and produce data output 135, which may then be stored or transmitted.

Sensors (S), such as gauges, may be positioned about oilfield 100 to collect data relating to various oilfield operations as described previously. As shown, sensor (S) is positioned in one or more locations in the drilling tools and/or at rig 128 to measure drilling parameters, such as weight on bit, torque on bit, pressures, temperatures, flow rates, compositions, rotary speed, and/or other parameters of the field operation. Sensors (S) may also be positioned in one or more locations in the circulating system.

Drilling tools 106b may include a bottom hole assembly (BHA) (not shown), generally referenced, near the drill bit (e.g., within several drill collar lengths from the drill bit). The bottom hole assembly includes capabilities for measuring, processing, and storing information, as well as communicating with surface unit 134. The bottom hole assembly further includes drill collars for performing various other measurement functions.

The bottom hole assembly may include a communication subassembly that communicates with surface unit 134. The communication subassembly is adapted to send signals to and receive signals from the surface using a communications channel such as mud pulse telemetry, electro-magnetic telemetry, or wired drill pipe communications. The communication subassembly may include, for example, a transmitter that generates a signal, such as an acoustic or electromagnetic signal, which is representative of the measured drilling parameters. It will be appreciated by one of skill in the art that a variety of telemetry systems may be employed, such as wired drill pipe, electromagnetic or other known telemetry systems.

Typically, the wellbore is drilled according to a drilling plan that is established prior to drilling. The drilling plan typically sets forth equipment, pressures, trajectories and/or other parameters that define the drilling process for the wellsite. The drilling operation may then be performed according to the drilling plan. However, as information is gathered, the drilling operation may need to deviate from the drilling plan. Additionally, as drilling or other operations are performed, the subsurface conditions may change. The earth model may also need adjustment as new information is collected

The data gathered by sensors (S) may be collected by surface unit 134 and/or other data collection sources for analysis or other processing. The data collected by sensors (S) may be used alone or in combination with other data. The data may be collected in one or more databases and/or transmitted on or offsite. The data may be historical data, real time data, or combinations thereof. The real time data may be used in real time, or stored for later use. The data may also be combined with historical data or other inputs for further analysis. The data may be stored in separate databases, or combined into a single database.

Surface unit 134 may include transceiver 137 to allow communications between surface unit 134 and various portions of the oilfield 100 or other locations. Surface unit 134 may also be provided with or functionally connected to one or more controllers (not shown) for actuating mechanisms at oilfield 100. Surface unit 134 may then send command signals to oilfield 100 in response to data received. Surface unit 134 may receive commands via transceiver 137 or may itself execute commands to the controller. A processor may be provided to analyze the data (locally or remotely), make the decisions and/or actuate the controller. In this manner, oilfield 100 may be selectively adjusted based on the data collected. This technique may be used to optimize (or improve) portions of the field operation, such as controlling drilling, weight on bit, pump rates, or other parameters. These adjustments may be made automatically based on computer protocol, and/or manually by an operator. In some cases, well plans may be adjusted to select optimum (or improved) operating conditions, or to avoid problems.

Figure 1C illustrates a wireline operation being performed by wireline tool 106c suspended by rig 128 and into wellbore 136 of Figure 1B. Wireline tool 106c is adapted for deployment into wellbore 136 for generating well logs, performing downhole tests and/or collecting samples. Wireline tool 106c may be used to provide another method and apparatus for performing a seismic survey operation. Wireline tool 106c may, for example, have an explosive, radioactive, electrical, or acoustic energy source 144 that sends and/or receives electrical signals to surrounding subterranean formations 102 and fluids therein.

Wireline tool 106c may be operatively connected to, for example, geophones 118 and a computer 122a of a seismic truck 106a of Figure 1A. Wireline tool 106c may also provide data to surface unit 134. Surface unit 134 may collect data generated during the wireline operation and may produce data output 135 that may be stored or transmitted. Wireline tool 106c may be positioned at various depths in the wellbore 136 to provide a survey or other information relating to the subterranean formation 102.

Sensors (S), such as gauges, may be positioned about oilfield 100 to collect data relating to various field operations as described previously. As shown, sensor S is positioned in wireline tool 106c to measure downhole parameters which relate to, for example porosity, permeability, fluid composition and/or other parameters of the field operation.

Figure 1D illustrates a production operation being performed by production tool 106d deployed from a production unit or Christmas tree 129 and into completed wellbore 136 for drawing fluid from the downhole reservoirs into surface facilities 142. The fluid flows from reservoir 104 through perforations in the casing (not shown) and into production tool 106d in wellbore 136 and to surface facilities 142 via gathering network 146.

Sensors (S), such as gauges, may be positioned about oilfield 100 to collect data relating to various field operations as described previously. As shown, the sensor (S) may be positioned in production tool 106d or associated equipment, such as Christmas tree 129, gathering network 146, surface facility 142, and/or the production facility, to measure fluid parameters, such as fluid composition, flow rates, pressures, temperatures, and/or other parameters of the production operation.

Production may also include injection wells for added recovery. One or more gathering facilities may be operatively connected to one or more of the wellsites for selectively collecting downhole fluids from the wellsite(s).

While Figures 1B-1D illustrate tools used to measure properties of an oilfield, it will be appreciated that the tools may be used in connection with non-oilfield operations, such as gas fields, mines, aquifers, storage or other subterranean facilities. Also, while certain data acquisition tools are depicted, it will be appreciated that various measurement tools capable of sensing parameters, such as seismic two-way travel time, density, resistivity, production rate, etc., of the subterranean formation and/or its geological formations may be used. Various sensors (S) may be located at various positions along the wellbore and/or the monitoring tools to collect and/or monitor the desired data. Other sources of data may also be provided from offsite locations.

The field configurations of Figures 1A-1D are intended to provide a brief description of an example of a field usable with oilfield application frameworks. Part of, or the entirety, of oilfield 100 may be on land, water and/or sea. Also, while a single field measured at a single location is depicted, oilfield applications may be utilized with any combination of one or more oilfields, one or more processing facilities and one or more wellsites.

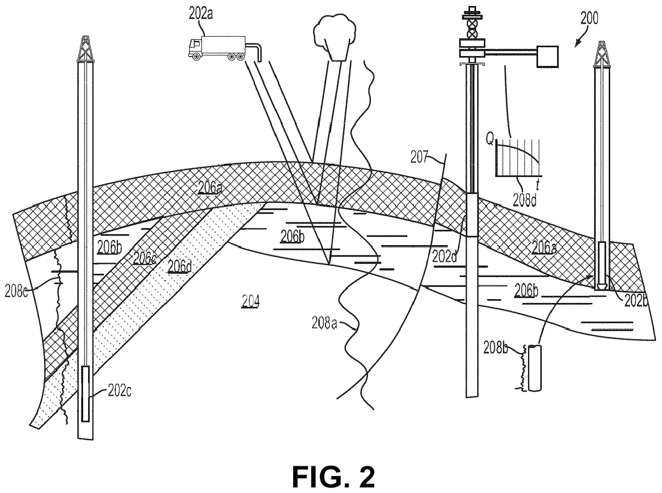

Figure 2 illustrates a schematic view, partially in cross section of oilfield 200 having data acquisition tools 202a, 202b, 202c and 202d positioned at various locations along oilfield 200 for collecting data of subterranean formation 204 in accordance with implementations of various technologies and techniques described herein. Data acquisition tools 202a-202d may be the same as data acquisition tools 106a-106d of Figures 1A-1D, respectively, or others not depicted. As shown, data acquisition tools 202a-202d generate data plots or measurements 208a-208d, respectively. These data plots are depicted along oilfield 200 to demonstrate the data generated by the various operations.

Data plots 208a-208c are examples of static data plots that may be generated by data acquisition tools 202a-202c, respectively; however, it should be understood that data plots 208a-208c may also be data plots that are updated in real time. These measurements may be analyzed to better define the properties of the formation(s) and/or determine the accuracy of the measurements and/or for checking for errors. The plots of each of the respective measurements may be aligned and scaled for comparison and verification of the properties.

Static data plot 208a is a seismic two-way response over a period of time. Static plot 208b is core sample data measured from a core sample of the formation 204. The core sample may be used to provide data, such as a graph of the density, porosity, permeability, or some other physical property of the core sample over the length of the core. Tests for density and viscosity may be performed on the fluids in the core at varying pressures and temperatures. Static data plot 208c is a logging trace that typically provides a resistivity or other measurement of the formation at various depths.

A production decline curve or graph 208d is a dynamic data plot of the fluid flow rate over time. The production decline curve typically provides the production rate as a function of time. As the fluid flows through the wellbore, measurements are taken of fluid properties, such as flow rates, pressures, composition, etc.

Other data may also be collected, such as historical data, user inputs, economic information, and/or other measurement data and other parameters of interest. As described below, the static and dynamic measurements may be analyzed and used to generate models of the subterranean formation to determine characteristics thereof. Similar measurements may also be used to measure changes in formation aspects over time.

The subterranean structure 204 has a plurality of geological formations 206a-206d. As shown, this structure has several formations or layers, including a shale layer 206a, a carbonate layer 206b, a shale layer 206c and a sand layer 206d. A fault 207 extends through the shale layer 206a and the carbonate layer 206b. The static data acquisition tools are adapted to take measurements and detect characteristics of the formations.

While a specific subterranean formation with specific geological structures is depicted, it will be appreciated that oilfield 200 may contain a variety of geological structures and/or formations, sometimes having extreme complexity. In some locations, typically below the water line, fluid may occupy pore spaces of the formations. Each of the measurement devices may be used to measure properties of the formations and/or its geological features. While each acquisition tool is shown as being in specific locations in oilfield 200, it will be appreciated that one or more types of measurement may be taken at one or more locations across one or more fields or other locations for comparison and/or analysis.

The data collected from various sources, such as the data acquisition tools of Figure 2, may then be processed and/or evaluated. Typically, seismic data displayed in static data plot 208a from data acquisition tool 202a is used by a geophysicist to determine characteristics of the subterranean formations and features. The core data shown in static plot 208b and/or log data from well log 208c are typically used by a geologist to determine various characteristics of the subterranean formation. The production data from graph 208d is typically used by the reservoir engineer to determine fluid flow reservoir characteristics. The data analyzed by the geologist, geophysicist and the reservoir engineer may be analyzed using modeling techniques.

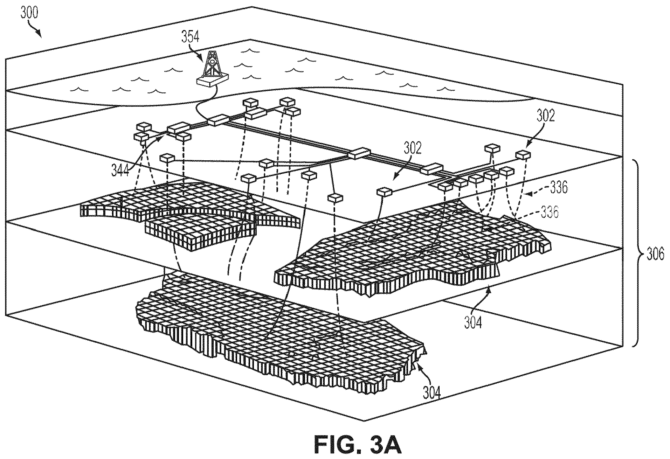

Figure 3A illustrates an oilfield 300 for performing production operations in accordance with implementations of various technologies and techniques described herein. As shown, the oilfield has a plurality of wellsites 302 operatively connected to central processing facility 354. The oilfield configuration of Figure 3A is not intended to limit the scope of the oilfield application system. Part, or all, of the oilfield may be on land and/or sea. Also, while a single oilfield with a single processing facility and a plurality of wellsites is depicted, any combination of one or more oilfields, one or more processing facilities and one or more wellsites may be present.

Each wellsite 302 has equipment that forms wellbore 336 into the Earth. The wellbores extend through subterranean formations 306 including reservoirs 304. These reservoirs 304 contain fluids, such as hydrocarbons. The wellsites draw fluid from the reservoirs and pass them to the processing facilities via surface networks 344. The surface networks 344 have tubing and control mechanisms for controlling the flow of fluids from the wellsite to processing facility 354.

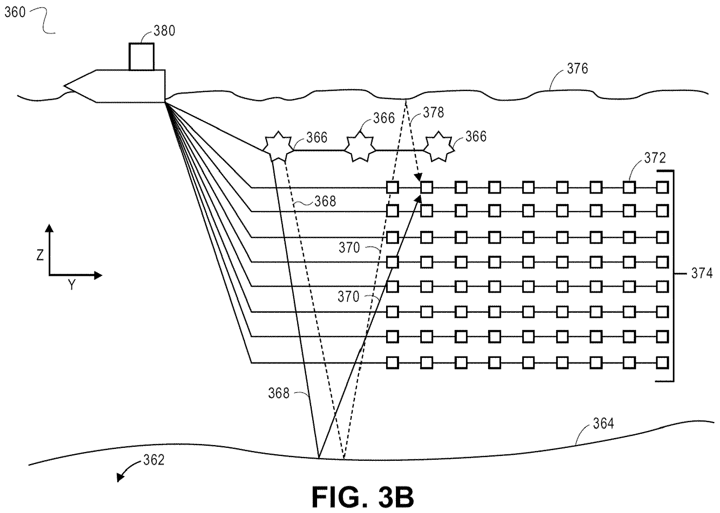

Attention is now directed to Figure 3B, which illustrates a side view of a marine-based survey 360 of a subterranean subsurface 362 in accordance with one or more implementations of various techniques described herein. Subsurface 362 includes seafloor surface 364. Seismic sources 366 may include marine sources such as vibroseis or airguns, which may propagate seismic waves 368 (e.g., energy signals) into the Earth over an extended period of time or at a nearly instantaneous energy provided by impulsive sources. The seismic waves may be propagated by marine sources as a frequency sweep signal. For example, marine sources of the vibroseis type may initially emit a seismic wave at a low frequency (e.g., 5 Hz) and increase the seismic wave to a high frequency (e.g., 80-90 Hz) over time.

The component(s) of the seismic waves 368 may be reflected and converted by seafloor surface 364 (i.e., reflector), and seismic wave reflections 370 may be received by a plurality of seismic receivers 372. Seismic receivers 372 may be disposed on a plurality of streamers (i.e., streamer array 374). The seismic receivers 372 may generate electrical signals representative of the received seismic wave reflections 370. The electrical signals may be embedded with information regarding the subsurface 362 and captured as a record of seismic data.

In one implementation, each streamer may include streamer steering devices such as a bird, a deflector, a tail buoy and the like, which are not illustrated in this application. The streamer steering devices may be used to control the position of the streamers in accordance with the techniques described herein.

In one implementation, seismic wave reflections 370 may travel upward and reach the water/air interface at the water surface 376, a portion of reflections 370 may then reflect downward again (i.e., sea-surface ghost waves 378) and be received by the plurality of seismic receivers 372. The sea-surface ghost waves 378 may be referred to as surface multiples. The point on the water surface 376 at which the wave is reflected downward is generally referred to as the downward reflection point.

The electrical signals may be transmitted to a vessel 380 via transmission cables, wireless communication or the like. The vessel 380 may then transmit the electrical signals to a data processing center. Alternatively, the vessel 380 may include an onboard computer capable of processing the electrical signals (i.e., seismic data). Those skilled in the art having the benefit of this disclosure will appreciate that this illustration is highly idealized. For instance, surveys may be of formations deep beneath the surface. The formations may typically include multiple reflectors, some of which may include dipping events, and may generate multiple reflections (including wave conversion) for receipt by the seismic receivers 372. In one implementation, the seismic data may be processed to generate a seismic image of the subsurface 362.

Marine seismic acquisition systems tow each streamer in streamer array 374 at the same depth (e.g., 5-10m). However, marine based survey 360 may tow each streamer in streamer array 374 at different depths such that seismic data may be acquired and processed in a manner that avoids the effects of destructive interference due to sea-surface ghost waves. For instance, marine-based survey 360 of Figure 3B illustrates eight streamers towed by vessel 380 at eight different depths. The depth of each streamer may be controlled and maintained using the birds disposed on each streamer.

**Automating the Parameterization of Multi-Stage Iterative Source Separation with Priors Using Machine-Learning**

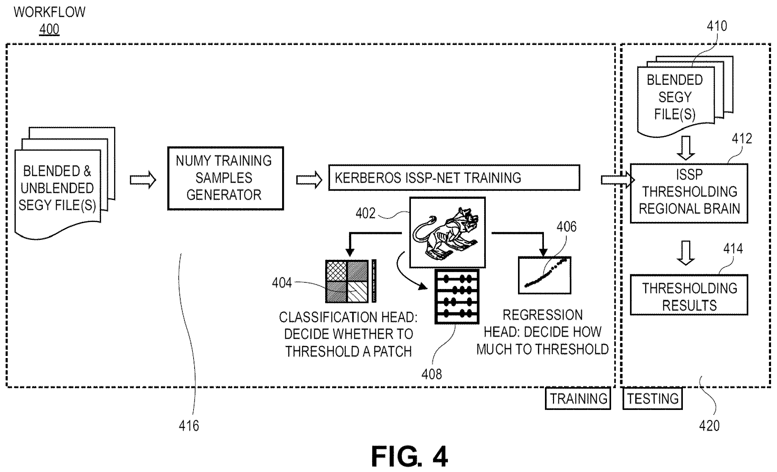

According to certain embodiments, systems and methods are provided using machine learning (ML) that automate the parameterization process for multi-stage iterative source separation. Figure 4 illustrates a schematic view of a workflow for source separation using a machine learning model, according to an embodiment. Source separation may be performed to recover a non-overlapping coherent signal $\mathbf{u} \in \mathbb{R}^{n_t n_s n_r \times 1}$, also known as deblended data 410 seen in Figure 4 from nonadaptive linear blended measurements $\mathbf{b} = \Gamma\mathbf{u}$, where $\Gamma \in \mathbb{R}^{n_c n_r \times n_t n_s n_r}$ denotes the blending operator with $n_c \ll n_t n_s$, hence, the underdetermined system of the linear equation $\mathbf{b} = \Gamma\mathbf{u}$ has infinitely many solutions.

Here $\mathbf{b} \in \mathbb{R}^{n_c n_r \times 1}$ is a continuously recorded supershot, or superposition of $n_s$ impulsive sources, at $n_r$ receivers where multiple sources (e.g., airguns or vibroseis) fire continuously at predefined locations with random time-dithers, and $n_c$, $n_t$ denote the time samples of blended and deblended data, respectively.

Utilizing the prior knowledge that the deblended signal $\mathbf{u}$ is sparse in some multidimensional transform domain $\mathcal{S}$, one can solve the following analysis-based basis pursuit denoising (BPDN) formulation:

$$\min_{\mathbf{u}} ||\mathcal{S}\mathbf{u}||_1 \ \textbf{ subject to } \ \frac{1}{2}||\mathbf{b} - \Gamma\mathbf{u}||_2^2 \leq \epsilon, \quad (1)$$

where the $\ell_1$ norm $||r||_1$ is the sum of absolute values of the elements in the vector $\mathbf{r}$, and $\varepsilon$ is the noise level up to which we want to fit the least-squares misfit.

The success of source separation using equation (1) relies on the coherency criteria, which depends on the following two factors: *(i)* sparsity of the unblended coherent signal in the transform domain; *(ii)* identification of both the weak and strong coherent signal buried under the strong interference noise in the transform domain. Often, the way that data is acquired can lead to suboptimal randomization in the interference noise. Either strong-on-weak phenomenon, where strong interference noise appears in a cluster over a weak coherent signal of interest, or strong-on-strong phenomenon where strong interference noise appears in a cluster over a weak coherent signal of interest, is observed. This is because sources are activated in flip-flop-flap manner with $\pm 1$ seconds dither to generate strong-on-weak characteristic of noise or in flip-flip-flip manner to generate strong-on-strong effect.

According to certain embodiments, to stabilize source-separation, a multiple stage iterative source separation 412 with priors (MS-ISSP) technique may be implemented on the blended signal 410 within the testing portion 420 of workflow 400 as seen in Figure 4. In certain embodiments, the information about the wavefield propagation may be combined with a sparsity-promoting transform domain such that the signal of interest that is buried beneath the high-energy interference noise is sparser in the transformed domain, while the interference noise becomes more incoherent and random. To do so, equation (1) may be modified as follows:

$$\min_{\widehat{\mathbf{u}}_j} ||\mathcal{S}\mathcal{P}_j\widehat{\mathbf{u}}_j||_1 \quad \textbf{ subject to } \quad \begin{cases} \mathbf{u} = \sum_j \widehat{\mathbf{u}}_j \\ \mathbf{d}_j = \mathbf{d}_{j-1} - \Gamma\widehat{\mathbf{u}}_{j-1}, \\ ||\mathbf{d}_j - \Gamma\mathbf{u}_j||_2^2 \leq \epsilon_j \end{cases} \quad (2)$$

where the operator $\mathcal{P}$ encompasses various suites of prior information, which enhances the sparsity of the signal in the transform domain. To solve equation 2, we use the fast-iterative shrinkage-thresholding algorithm (FISTA) where, at each iteration, we update the vector u as follows:

$$\widehat{\mathbf{u}}_{j,i} \quad = \quad \mathcal{P}_j^\dagger \mathcal{S}^H \left( \zeta_{\lambda,\alpha_i} \left( \mathcal{S}\mathcal{P}_j \left( \widehat{\mathbf{u}}_{j,i} + \alpha_i \Gamma^T (\mathbf{d}_j - \Gamma \widehat{\mathbf{u}}_{j,i-1}) \right) \right) \right), \qquad (3)$$

where $\zeta$ is the exponential shrinkage operator, $\alpha_i$, $\lambda$ are the step-length and thresholding values at iteration $i$, and the symbols $(.)^T, (.)^H$ represent the matrix transpose and conjugate transpose, respectively.

While the multi-stage approach may overcome challenges with acquisition design, thus stabilizing the source separation for strong-on-strong or strong-on-weak scenarios, the testing time to choose the right parametrization, e.g., thresholding value $\lambda$ may vary from data to data and take most of the time before MS-ISSP 412 is run in automated mode to provide thresholding results 414 within the testing portion 420 of workflow 400. Conceptually, this thresholding schedule should be a function of signal-to-noise (SNR) ratio. That is, for the part of the data where the SNR is high, aggressiveness in thresholding may be appropriate, whereas if the SNR is low, thresholding should be conducted conservatively.

The user may go through each part of the data manually to first find out the areas of low and high SNR and then test various thresholding options to find the best one such that there is no signal leakage. For large-scale seismic data, manual detection and thresholding is a computationally intractable task. Compared to other processing technologies such as interpolation, denoising, demultiplex or deghosting, given the source activation timing information, pairs of blended-deblended datasets can be generated along with the interference noise. Thus, in certain embodiments, a machine learning (ML) driven network or workflow 400 can be implemented which can help identify the patches of low and high SNR and provide enhanced thresholding values to reduce or eliminate signal loss. Therefore, machine learning technology methods, such as those disclosed herein, may be used to automate the parametrization of MS-ISSP 412 to reduce the testing time while working on different datasets from different geological environments.

A deep convolutional neural network may be used to automate the process of parametrization of MS-ISSP 412. The neural network may have multiple heads to perform multiple tasks simultaneously, (i.e., multi-task learning). For example, estimating a threshold parameter or value during each iteration of ISSP, calls for two tasks: determining if the patch comprises a high or low SNR, and determining the threshold value. The result of the first task is then used to determine whether or not to perform thresholding, while the results of the second task may dictate the specific level of thresholding. Figure 4 shows a workflow 400 for executing source separation, specifically using a Kerberos net 402 comprising a classification head 404 and a regression head 406 within a training portion 416 of the workflow 400.

According to certain embodiments, the classification head 404 helps in deciding whether to pass a patch through a thresholding routine, or to avoid it. The classification head 404 is trained using binary cross entropy loss (BCE). Y and $\hat{Y}$ represent ground truth and prediction, respectively.

$$BCE = -1/N * \sum(i=1 \text{ to } N) [y\_i * \log(\bar{y}\_i) + (1 - y\_i) * \log(1 - \bar{y}\_i)] \qquad (4)$$

According to certain embodiments, the regression head 406 helps in deciding how much to threshold. It is trained on mean square error (MSE) loss.

$$MSE = 1/N * \sum(i=1 \text{ to } N) (y\_i - \bar{y}\_i)^{\wedge}2 \qquad (5)$$

In some embodiments, there can be other heads, for example a segmentation head 408 as seen in Figure. 4. The segmentation head 408 can do pixelwise noise and signal thresholding estimations and is also trained on MSE loss using the same equation as the regression head 406. According to certain embodiments, the heads 404, 406, 408 can be used to weight share, in which the initial layers of the deep convolutional neural network (CNN) share their weights, analogues to the common body of Kerberos 402. This imposes a combined constraint which helps the deep CNN machine to enhance the features for multiple tasks simultaneously. Further, the network learns to reduce combined loss which may be weighted depending upon the importance of tasks. Once a network is trained, equation (3) may be modified to replace manual thresholding schedule with the ML-driven automated version as follows:

$$\mathbf{u}_i \quad = \quad \mathcal{P}^H \mathcal{S}^H (\zeta_{ml}(\mathcal{S}\mathcal{P}(\mathbf{u}_{i-1} + \alpha_i \Gamma^T(\mathbf{b} - \Gamma \mathbf{u}_{i-1})))), \qquad (6)$$

where $\zeta_{ml}$ represents the trained machine learning architecture as discussed above to automatically differentiate between the low and high SNR parts of the dataset and apply appropriate thresholding such that there is no, or little, signal loss, especially in the areas where there is strong-on-strong or strong-on-weak effects.

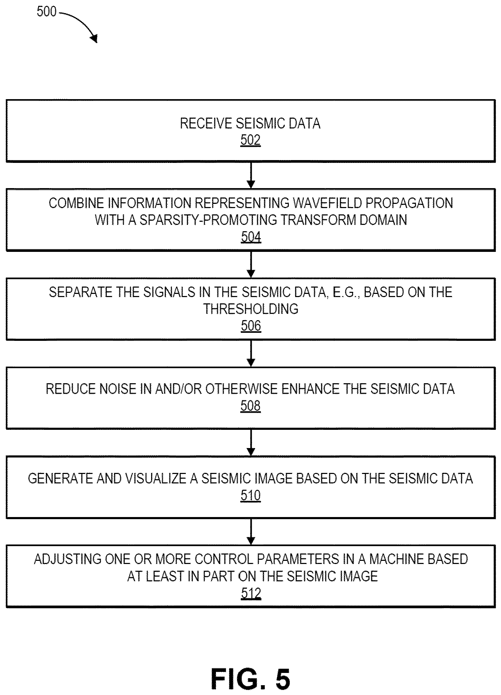

Figure 5 illustrates a flowchart of a method 500 for seismic processing, according to an embodiment. An illustrative order of the method 500 is provided below; however, one or more portions of the method 500 may be performed in a different order, simultaneously, repeated, or omitted. At least a portion of the method 500 may be performed using a computing system (described below).

The method 500 may include receiving seismic data, as at 502. The data may include signals representing multiple different sources, with the signals being blended, as discussed above.

The method 500 may also include combining information representing wavefield propagation (e.g., geological data) with a sparsity-promoting transform domain, as at 504. This may include selecting a thresholding parameter using a machine learning model as seen in Figure 4. The machine learning model may be trained to determine if, in specific sections or patches of the seismic data, the signal to noise ratio is relatively high or relatively low, for example relative to a threshold that is static or dynamically programmed, or otherwise determined. The machine learning model may then select the thresholding value based at least in part on the SNR. As discussed above, the ML model may be a CNN having multiple heads, comprising the classification head 404, the segmentation head, 406 and/or the regression head 408 seen in Figure 4. The different heads 404, 406, 408 may share weighting in the initial layers of the CNN.

According to certain embodiments, the method 500 also comprises separating the signals in the seismic data, e.g., based on the thresholding discussed above, as at 506. This may permit a reduction in the noise, for example, and/or other enhancements in the seismic data, as at 508. Further, a seismic image may be generated and visualized based on the seismic data, as at 510. According to certain embodiments, the seismic image is displayed on a display screen, for example a display screen that is connected to the computer 112a or the surface unit 134.

The method 500 may also include adjusting one or more control parameters may be adjusted in a machine, for example a drilling machine, as at 512, that according to certain embodiments is based at least in part on the seismic image. According to certain embodiments, the control parameters may be adjusted in the drilling tools 106b, the wireline tool 106c, the production tool 106d, and or the data acquisition tools 202a-d. In one embodiment, adjusting the control parameters may include generating and/or transmitting a signal (e.g., using a computing system) that instructs or causes a physical action to occur (e.g., at a wellsite). Adjusting the control parameters may also or instead include performing the physical action at the wellsite. The physical action may include selecting where to drill a wellbore, drilling the wellbore, varying a weight and/or torque on a drill bit that is drilling the wellbore, varying a drilling trajectory of the wellbore, varying a concentration and/or flow rate of a fluid pumped into the wellbore, or the like.

Accordingly, in certain embodiments, an ML-driven automation of the parametrization of the source-separation process used. In this process, a multi-headed network (CNN) may be used to differentiate between signal and noise so that patches or sections of the seismic data input with a high signal-to-noise ratio can be identified and, using ML, an appropriate thresholding can be designed.

The paired blended-deblended data can be used to train network can come from the real or synthetic data. The data can come from single of multi-component acquisition, be it marine or land, acquired at irregular and/or regular grid. The paired blended-deblended data pair can come from sequential or simultaneous shooting. If coming from sequential shooting, the blended data can be synthetically created to train the network using the workflow 400 seen in Figure 4. Once the network is trained, it can be injected inside a source-separation framework to automate the parameter selection at the thresholding step 506, thus expediting the convergence of source separation.

In one or more embodiments, the functions described can be implemented in hardware, software, firmware, or any combination thereof. For a software implementation, the techniques described herein can be implemented with modules (e.g., procedures, functions, subprograms, programs, routines, subroutines, modules, software packages, classes, and so on) that perform the functions described herein. A module can be coupled to another module or a hardware circuit by passing and/or receiving information, data, arguments, parameters, or memory contents. Information, arguments, parameters, data, or the like can be passed, forwarded, or transmitted using any suitable means including memory sharing, message passing, token passing, network transmission, and the like. The software codes can be stored in memory units and executed by processors. The memory unit can be implemented within the processor or external to the processor, in which case it can be communicatively coupled to the processor via various means as is known in the art.

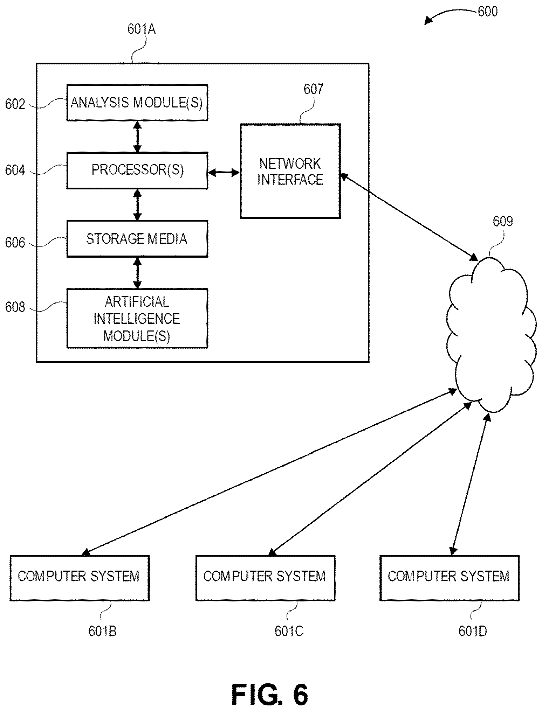

In some embodiments, any of the methods of the present disclosure may be executed using a system, such as a computing system. Figure 6 illustrates an example of such a computing system 600, in accordance with some embodiments. The computing system 600 may include a computer or computer system 601a, which may be an individual computer system 601a or an arrangement of distributed computer systems. The computer system 601a includes one or more analysis module(s) 602 configured to perform various tasks according to some embodiments, such as one or more methods disclosed herein. To perform these various tasks, the analysis module 602 executes independently, or in coordination with, one or more processors 604, which is (or are) connected to one or more storage media 606. The processor(s) 604 is (or are) also connected to a network interface 607 to allow the computer system 601a to communicate over a data network 609 with one or more additional computer systems and/or computing systems, such as 601b, 601c, and/or 601d (note that computer systems 601b, 601c and/or 601d may or may not share the same architecture as computer system 601a, and may be located in different physical locations, e.g., computer systems 601a and 601b may be located in a processing facility, while in communication with one or more computer systems such as 601c and/or 601d that are located in one or more data centers, and/or located in varying countries on different continents).

A processor can include a microprocessor, microcontroller, processor module or subsystem, programmable integrated circuit, programmable gate array, or another control or computing device.

The storage media 606 can be implemented as one or more computer-readable or machine-readable storage media. Note that while in the example embodiment of Figure 6 storage media 606 is depicted as within computer system 601a, in some embodiments, storage media 606 may be distributed within and/or across multiple internal and/or external enclosures of computing system 601a and/or additional computing systems. Storage media 606 may include one or more different forms of memory including semiconductor memory devices such as dynamic or static random access memories (DRAMs or SRAMs), erasable and programmable read-only memories (EPROMs), electrically erasable and programmable read-only memories (EEPROMs) and flash memories, magnetic disks such as fixed, floppy and removable disks, other magnetic media including tape, optical media such as compact disks (CDs) or digital video disks (DVDs), BLURAY® disks, or other types of optical storage, or other types of storage devices. Note that the instructions discussed above can be provided on one computer-readable or machine-readable storage medium, or alternatively, can be provided on multiple computer-readable or machine-readable storage media distributed in a large system having possibly plural nodes. Such computer-readable or machine-readable storage medium or media is (are) considered to be part of an article (or article of manufacture). An article or article of manufacture can refer to any manufactured single component or multiple components. The storage medium or media can be located either in the machine running the machine-readable instructions, or located at a remote site from which machine-readable instructions can be downloaded over a network for execution.

In some embodiments, computing system 600 contains one or more method execution module(s) 608. In the example of computing system 600, computer system 601a includes the method execution module 608. In some embodiments, a single method execution module may be used to perform some or all aspects of one or more embodiments of the methods. In alternate embodiments, a plurality of method execution modules may be used to perform some or all aspects of methods.

It should be appreciated that computing system 600 is only one example of a computing system, and that computing system 600 may have more or fewer components than shown, may combine additional components not depicted in the example embodiment of Figure 6, and/or computing system 600 may have a different configuration or arrangement of the components depicted in Figure 6. The various components shown in Figure 6 may be implemented in hardware, software, or a combination of both hardware and software, including one or more signal processing and/or application specific integrated circuits.

Further, the steps in the processing methods described herein may be implemented by running one or more functional modules in information processing apparatus such as general purpose processors or application specific chips, such as ASICs, FPGAs, PLDs, or other appropriate devices. These modules, combinations of these modules, and/or their combination with general hardware are all included within the scope of protection of the invention.

Geologic interpretations, models and/or other interpretation aids may be refined in an iterative fashion; this concept is applicable to embodiments of the present methods discussed herein. This can include use of feedback loops executed on an algorithmic basis, such as at a computing device (e.g., computing system 600, Figure 6), and/or through manual control by a user who may make determinations regarding whether a given step, action, template, model, or set of curves has become sufficiently accurate for the evaluation of the subsurface three-dimensional geologic formation under consideration.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. Moreover, the order in which the elements of the methods are illustrated and described may be re-arranged, and/or two or more elements may occur simultaneously. The embodiments were chosen and described in order to best explain the principles of the invention and its practical applications, to thereby enable others skilled in the art to best utilize the invention and various embodiments with various modifications as are suited to the particular use contemplated.

**Claims**

1. A method for processing seismic data, comprising:

   receiving blended seismic data from at least one seismic source;
   applying a sparsity promoting transform domain to the received blended seismic data to differentiate a primary signal from interference and background noise;

isolating the primary signal from the interference and background noise by selecting a threshold value in the sparsity promoting transform domain using a machine learning model, wherein the primary signal represents unblended seismic data; and

removing the interference and background noise from the unblended seismic data to produce modified seismic data.

2. The method of claim 1 wherein the machine learning model is trained to determine if a subset of the seismic data represents a high or a low signal to noise ratio relative to a predetermined value.

3. The method of claim 1 or 2 wherein selecting the threshold value is based at least partially upon multiple independent applications of the sparsity promoting transform domain to the received blended seismic data.

4. The method of any one of the preceding claims wherein isolating the primary signal from the interference and background noise by selecting a threshold value in the sparsity promoting transform domain using the machine learning model comprises using a machine learning model comprising a convolutional neural network (CNN) in which a classification head and a regression head share weights in initial layers of the CNN.

5. The method of any one of the preceding claims wherein selecting the threshold value comprises determining whether to pass a section of the seismic data to a thresholding routine based on binary cross entropy loss using the classification head of the machine learning model.

6. The method of claim 5 further comprising determining the threshold value based on mean square error (MSE) loss using the regression head of the learning model in response to determining to pass the section to the thresholding routine and/or further comprising conducing pixelwise noise and signal thresholding estimations based on MSE loss using a segmentation head of the machine learning model, wherein the segmentation head shares weights in initial layers of the CNN.

7. The method of any one of the preceding claims wherein removing the interference and background noise from the unblended seismic data to produce modified seismic data comprises removing the interference and background noise based on the selected threshold value and/or wherein removing the interference and background noise from the unblended seismic data to produce modified seismic data comprises removing the interference and background noise based on the application of the sparsity promoting transform domain to the received blended seismic data.

8. The method of any one of the preceding claims further comprising enhancing a sparsity of the blended seismic data in the transform domain by using wavefield propagation information, wherein the wavefield propagation information contains geological data of the subsurface and/or further comprising generating an image of the subsurface based on the modified seismic data.

9. A computing system, comprising:

one or more processors;
at least one seismic source communicated to the one or more processors; and
a memory system including one or more non-transitory computer-readable media storing instructions that, when executed by at least one of the one or more processors, cause the computing system to perform operations, the operations comprising a method for processing seismic data according to any one of the preceding claims, the method comprising:

receiving blended seismic data from the at least one seismic source;
applying a sparsity promoting transform domain to the received blended seismic data to differentiate a primary signal from interference and background noise;
enhancing a sparsity of the blended seismic data in the transform domain by using wavefield propagation information;
isolating the primary signal from the interference and background noise by selecting a threshold value in the sparsity promoting transform domain using a machine learning model, wherein the primary signal represents unblended seismic data, wherein the machine learning model is trained to determine if a subset of the seismic data represents a high or a low signal to noise ratio relative to a predetermined value;
removing the interference and background noise from the unblended seismic data to produce modified seismic data; and

generating an image of the subsurface based on the modified seismic data.

10. The computing system of claim 9 wherein selecting the threshold value is based at least partially upon multiple independent applications of the sparsity promoting transform domain to the received blended seismic data, and wherein the machine learning model comprises a convolutional neural network (CNN) in which a classification head and a regression head share weights in initial layers of the CNN.

11. The computing system of claim 9 or 10 wherein selecting the threshold value comprises:

determining whether to pass a section of the seismic data to a thresholding routine based on binary cross entropy loss using the classification head of the machine learning model;
determining the threshold value based on mean square error (MSE) loss using the regression head of the learning model in response to determining to pass the section to the thresholding routine; and
conducing pixelwise noise and signal thresholding estimations based on MSE loss using a segmentation head of the machine learning model, wherein the segmentation head shares weights in initial layers of the CNN.

12. The computing system of any one of the claim 9-11 wherein removing the interference and background noise from the seismic data to produce modified seismic data comprises removing the interference and background noise based on the selected threshold value and the application of the sparsity promoting transform domain to the received blended seismic data.

13. The computing system of any one of the claim 9-12 wherein enhancing the sparsity of the blended seismic data in the transform domain by using wavefield propagation information comprises using wavefield propagation information that contains geological data of the subsurface and/or wherein the operations further comprise performing a wellsite action in response to the modified seismic data.

14. A non-transitory computer-readable medium storing instructions that, when executed by at least one processor of a computing system, cause the computing system to perform operations, the operations comprising a method for processing seismic data according to any one of the claims 1 - 8, the method comprising:

receiving blended seismic data from at least one seismic source;
applying a sparsity promoting transform domain to the received blended seismic data to differentiate a primary signal from interference and background noise;
enhancing a sparsity of the blended seismic data in the transform domain by using wavefield propagation information;
isolating the primary signal from the interference and background noise by selecting a threshold value in the sparsity promoting transform domain using a machine learning model, wherein the primary signal represents unblended seismic data, wherein the machine learning model is trained to determine if a subset of the seismic data represents a high or a low signal to noise ratio relative to a predetermined value, wherein the threshold value is based at least partially upon multiple independent applications of the sparsity promoting transform domain to the received blended seismic data, wherein the machine learning model comprises a convolutional neural network (CNN) in which a classification head and a regression head share weights in initial layers of the CNN, wherein selecting the threshold value comprises:

determining whether to pass a section of the seismic data to a thresholding routine based on binary cross entropy loss using the classification head of the machine learning model;
determining the threshold value based on mean square error (MSE) loss using the regression head of the learning model in response to determining to pass the section to the thresholding routine; and
conducing pixelwise noise and signal thresholding estimations based on MSE loss using a segmentation head of the machine learning model, wherein the segmentation head shares weights in initial layers of the CNN;

removing the interference and background noise from the unblended seismic data based on the selected threshold value and the application of the sparsity promoting transform domain to the received blended seismic data to produce modified seismic data;
generating an image of the subsurface based on the modified seismic data;
displaying the image on a display; and
performing a wellsite action in response to the modified seismic data, wherein performing the wellsite action comprises generating or transmitting a signal that instructs or causes an action to occur, wherein the action comprises a physical action, and wherein the physical action comprises selecting where to drill a wellbore in the subsurface formation, drilling the wellbore, varying a trajectory of the wellbore, varying a weight or torque on a drill bit that is drilling the wellbore, varying a rate or concentration of a fluid being pumped into the wellbore, or a combination thereof.

15. The non-transitory computer-readable medium of claim 14 wherein enhancing the sparsity of the seismic data in the transform domain by using wavefield propagation information comprises using wavefield propagation information that contains geological data of the subsurface and/or wherein performing the wellsite action further comprises adjusting at least one control parameter in a machine based on the image.

FIG. 1A

FIG. 1B

FIG. 1C

FIG. 1D

**FIG. 2**

**FIG. 3A**

**FIG. 3B**

EP 4 471 464 A1

FIG. 4

500

RECEIVE SEISMIC DATA
502

COMBINE INFORMATION REPRESENTING WAVEFIELD PROPAGATION
WITH A SPARSITY-PROMOTING TRANSFORM DOMAIN
504

SEPARATE THE SIGNALS IN THE SEISMIC DATA, E.G., BASED ON THE
THRESHOLDING
506

REDUCE NOISE IN AND/OR OTHERWISE ENHANCE THE SEISMIC DATA
508

GENERATE AND VISUALIZE A SEISMIC IMAGE BASED ON THE SEISMIC DATA
510

ADJUSTING ONE OR MORE CONTROL PARAMETERS IN A MACHINE BASED
AT LEAST IN PART ON THE SEISMIC IMAGE
512

# FIG. 5

**FIG. 6**

Europäisches
Patentamt

European
Patent Office

Office européen
des brevets

# EUROPEAN SEARCH REPORT

**Application Number**

EP 24 17 9416

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZU SHAOHUAN ET AL: "Hybrid-Sparsity Constrained Dictionary Learning for Iterative Deblending of Extremely Noisy Simultaneous-Source Data", IEEE TRANSACTIONS ON GEOSCIENCE AND REMOTE SENSING, IEEE, USA, vol. 57, no. 4, 1 April 2019 (2019-04-01), pages 2249-2262, XP011716752, ISSN: 0196-2892, DOI: 10.1109/TGRS.2018.2872416 [retrieved on 2019-03-25] | 1-3,7 | INV. G01V1/36 |
| Y | * abstract * * page 2250, column 1, paragraph 3 * * page 2258, column 2, paragraph "C. Field Data Example" * * page 2252, column 2, paragraph "A. Quantitive Analysis" * * page 2252, column 1, paragraph "C. Deblending via Hybrid-Sparsity Constrained" * * figures 13,14,16-19 * ----- | 4-6, 8-12,14, 15 | |
| Y | WO 2022/155676 A1 (SCHLUMBERGER TECHNOLOGY CORP [US]; SCHLUMBERGER CA LTD [CA] ET AL.) 21 July 2022 (2022-07-21) | 4-6, 8-12,14, 15 | TECHNICAL FIELDS SEARCHED (IPC) G01V G06N |
| A | * paragraph [0096] * ----- | 1-3,7,13 | |
| A | CN 113 673 338 A (UNIV SOUTH CHINA TECH) 19 November 2021 (2021-11-19) * paragraph [0004] - paragraph [0185] * ----- | 4-6,10, 11,14 | |

The present search report has been drawn up for all claims

| Place of search | Date of completion of the search | Examiner |
|---|---|---|
| The Hague | 20 September 2024 | Hippchen, Sabine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 9416

This annex lists the patent family members relating to the patent documents cited in the above-mentioned European search report.
The members are as contained in the European Patent Office EDP file on
The European Patent Office is in no way liable for these particulars which are merely given for the purpose of information.

20-09-2024

| Patent document cited in search report | Publication date | Patent family member(s) | Publication date |
|---|---|---|---|
| WO 2022155676 A1 | 21-07-2022 | CA 3208331 A1 | 21-07-2022 |
| | | EP 4278219 A1 | 22-11-2023 |
| | | US 2024061136 A1 | 22-02-2024 |
| | | WO 2022155676 A1 | 21-07-2022 |
| CN 113673338 A | 19-11-2021 | NONE | |

EPO FORM P0459

For more details about this annex : see Official Journal of the European Patent Office, No. 12/82

**EP 4 471 464 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202311037870